# EUROPEAN PATENT APPLICATION

(11) **EP 3 498 351 A1**
(43) Date of publication of application: **19.06.2019**
(21) Application number: 17207089.8
(22) Date of filing: 13.12.2017
(51) Int. Cl.: A63F 13/79, G06F 21/64, G06T 19/00, H04L 9/32

(54) **A COMPUTER-IMPLEMENTED METHOD, APPARATUS AND A COMPUTER PROGRAM**

(71) Applicant: Vestel Elektronik Sanayi ve Ticaret A.S., 45030 Manisa (TR)
(72) Inventor: KÍRÍSKEN, Barbaros, 45030 Manisa (TR)
(74) Representative: Whitfield, Ian

(57) **Abstract**

A computer-implemented method for enabling verification of identity of a user (1). The method comprises: encrypting information (2) associated with the user (1) using a private key; embedding the encrypted information onto a visual representation (3) associated with the user; making the information associated with the user available to another user (4) as non-encrypted information (6); and making a public key for decrypting the encrypted information available to the other user (4). A computer-implemented method of verifying that a visual representation (3) is associated with a user (1) is also disclosed. The method comprises: obtaining the information (2) associated with the user (1) as non-encrypted information (6); obtaining the visual representation (3); decrypting using a public key the encrypted information embedded onto the visual representation (3); comparing the decrypted information with the obtained non-encrypted information (6); and determining that the visual representation (3) is associated with the user (1) if the decrypted information is the same as the information (2) associated with the user (1).

## Description

### Technical Field

The present disclosure relates to a computer-implemented method, apparatus and a computer program.

### Background

In a virtual world environment, such as an online multiplayer computer game or the like, each user controls and/or is characterised by a particular avatar. An avatar is a visual representation of a user in the virtual world environment. A user typically customises the visual appearance of their avatar in order to make the avatar visually distinct from avatars belonging to other users so that when other users see the user's avatar in the virtual world environment, the other users can recognise the avatar as belonging to the user.

### Summary

According to a first aspect disclosed herein, there is provided a computer-implemented method for enabling verification of identity of a user, the method comprising: encrypting information associated with the user using a private key; embedding the encrypted information onto the visual appearance of a visual representation associated with the user such that the encrypted information is visible to another user; making the information associated with the user available to the other user as non-encrypted information; and making a public key for decrypting the encrypted information available to the other user; whereby the other user can decrypt the encrypted information embedded onto the visual appearance of the visual representation associated with the user and can compare the decrypted information with the information made available to the other user as non-encrypted information.

This allows a user to provide a way for other users to determine whether or not a visual representation encountered in a virtual world environment is a visual representation associated with the user.

The encrypted information is "visible" to another user in the sense that a camera or some video processing device of the other user is able to view or "see" the encrypted information. Likewise, the other user decrypting the encrypted information embedded onto the visual appearance of the visual representation associated with the user and the other user comparing the decrypted information with the information made available to the other user as non-encrypted information will typically be carried out by or using some processing device of the other user.

According to a second aspect disclosed herein, there is provided a computer-implemented method of verifying that a visual representation having encrypted information embedded onto its visual appearance is associated with a user, the method comprising: obtaining the information associated with the user as non-encrypted information; obtaining the visual representation; decrypting using a public key the encrypted information embedded onto the visual appearance of the visual representation; comparing the decrypted information from the visual representation with the obtained non-encrypted information associated with the user; and determining that the visual representation is associated with the user if the decrypted information is the same as the non-encrypted information associated with the user.

This allows a user to determine whether or not a visual representation encountered in a virtual world environment is a visual representation associated with a particular user. This is helpful if the encountered visual representation has the same visual appearance as a visual representation of a particular user, but is instead an impersonation and is not actually associated with that user.

In an example, the method comprises: determining that the visual representation is not associated with the user if the decrypted information is not the same as the information associated with the user.

In an example, the visual representation is an avatar provided for interaction in a virtual world environment.

In an example, the information associated with the user is biometric information of the user.

In an example, the public key is or comprises the information associated with the user.

In an example, the information associated with the user is stored in a database accessible to other users.

In an example, the encrypted information is embedded onto the visual appearance of a visual representation as one or more of: a barcode, a QR or matrix barcode, a colour code, and a colour pattern.

According to a third aspect disclosed herein, there is provided apparatus comprising: at least one processor; at least one memory including computer program instructions; the at least one memory and the computer program instructions being configured to, with the at least one processor, cause the apparatus to carry out the method described above.

According to a fourth aspect described herein, there is provided a computer program comprising instructions such that when the computer program is executed on one or more computing devices, the one or more computing devices are arranged to: encrypt information associated with the user using a private key; embed the encrypted information onto the visual appearance of a visual representation associated with the user such that the encrypted information is visible to another user; make the information associated with the user available to the other user as non-encrypted information; and make a public key for decrypting the encrypted information available to the other user; whereby the other user can decrypt the encrypted information embedded onto the visual appearance of the visual representation associated with the user and can compare the decrypted information with the information made available to the other user as non-encrypted information.

According to a fifth aspect described herein, there is provided a computer program comprising instructions such that when the computer program is executed on one or more computing devices, the one or more computing devices are arranged to: obtain the information associated with the user as non-encrypted information; obtain the visual representation; decrypt using a public key the encrypted information embedded onto the visual appearance of the visual representation; compare the decrypted information from the visual representation with the obtained non-encrypted information associated with the user; and determine that the visual representation is associated with the user if the decrypted information is the same as the non-encrypted information associated with the user.

In an example, the computer program comprises instructions such that when the computer program is executed on one or more computing devices, the one or more computing devices are arranged to: determine that the visual representation is not associated with the user if the decrypted information is not the same as the information associated with the user.

In an example, the visual representation is an avatar provided for interaction in a virtual world environment.

In an example, the information associated with the user is biometric information of the user.

In an example, the encrypted information is embedded onto the visual appearance of a visual representation as one or more of: a barcode, a QR or matrix barcode, a colour code, and a colour pattern.

### Brief Description of the Drawings

To assist understanding of the present disclosure and to show how embodiments may be put into effect, reference is made by way of example to the accompanying drawings in which:

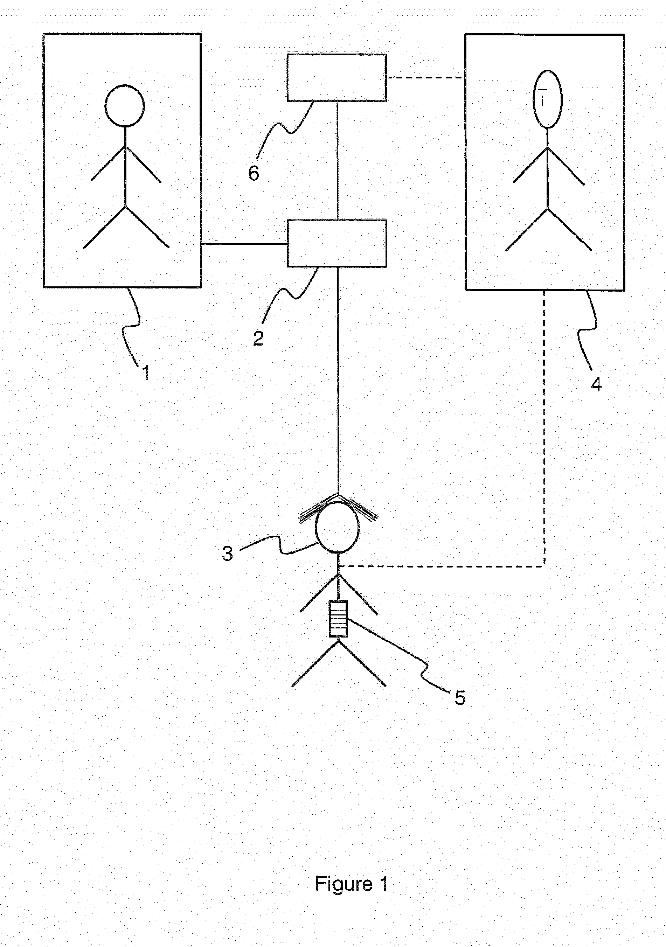

Figure 1 shows schematically an example of encrypted information associated with a first user embedded onto the visual appearance of a visual representation of the first user.

### Detailed Description

In a virtual world environment, such as an online multiplayer computer game or the like, each real world user controls and/or is characterised by a particular avatar. An avatar is a visual representation of a user in the virtual world environment. A user may be able to customise the visual appearance of their avatar in order to make the avatar visually distinct from avatars belonging to other users so that when other users see the user's avatar in the virtual world environment, the other users can recognise the avatar as belonging to the user.

However, some virtual world environments may inadvertently allow for users to modify the visual appearance of their avatar in order to impersonate or mimic the avatar of another user. This is problematic in certain situations, particularly when there is no mechanism to verify whether an avatar in a virtual world is associated with a particular user. If users cannot be sure that a particular avatar is that of a particular user then the enjoyment of the experience provided by the virtual world environment is reduced. Impersonation of another user can also lead to more serious issues, such as fraud and theft.

Referring now to Figure 1, there is shown schematically a first user 1. The first user 1 is in the real world. Information 2 is associated with the first user 1. The information 2 is characteristic of the first user 1 and can be used to identify the first user 1 and distinguish the first user from other users. In this example, the information 2 is biometric information of the first user 1. This may be for example a unique biometric identifier, such as a user's fingerprint or palm print, a map of the features of a user's face, a scan of the user's retina, or the like.

The first user 1 has a visual representation 3. The visual representation 3 of the first user 1 represents the first user 1 in a virtual world environment such as an online game. In this example, the visual representation 3 is a virtual character, e.g. an avatar. The visual appearance of the visual representation 3 (i.e. the surface of the visual representation 3 that is visible to other users in the virtual world environment) can be altered and customised by the first user 1.

A method of enabling a second user 4 to verify that the visual representation 3 is a representation of the first user 1 and not a representation of another user will now be described.

The information 2 associated with the first user 2 is encrypted using a private key of a public/private key pair. The use of public/private key pairs for authentication and encryption is well known in itself and will not be described in detail herein.

The encrypted information is then embedded onto, or fused into, the visual appearance (i.e. the outer surface) of the visual representation 3 of the first user 1. The embedded encrypted information 5 is embedded in a form such as to be visible to other users (such as the second user 4) in a virtual world environment in which the visual representation 3 of the first user 1 is present. In this example, the encrypted information is embedded onto the visual appearance of the virtual representation 3 of the first user 1 as a barcode. In another example, the encrypted information is embedded as a different type of visual identifier, such as a QR or matrix barcode, a colour code or a colour pattern. The embedded encrypted information 5 is embedded in a form such as to be visible to other users in the sense that a processing device of other users can "see" and read the embedded encrypted information 5, using for example a camera and/or some processing device.

The information 2 associated with the first user 1 is also made available to other users, including here the second user 4. The information 2 is made available as non-encrypted information so that it can be read by (processing devices of) the other users. In this example, the information 2 associated with the first user 1 is stored in a database 6 accessible to other users. The information 2 associated with the first user 1 stored in the database 6 may for example be publicly available to any user or only available to users upon entry of appropriate credentials, such as a password, login details, etc. In another example, the information 2 can be passed by the first user 1 only to one or more specific second users 4 (which may for example be trusted friends or acquaintances of the first user 1). In another example, the information 2 can be transferred by peer to peer networking.

The public key of the public/private key pair for decrypting the encrypted information associated with the first user is also made available to the second user 4 or to a plurality of users so that they can decrypt the embedded encrypted information 5. In an example, the public key may be made available to the second user 4 only when requested by the second user 4. Alternatively, similarly to the information 2 discussed above, the public key may be stored in a database 6 accessible to other users. The public key stored in the database 6 may for example be publicly available to any user or only available to users upon entry of appropriate credentials, such as a password, login details, etc. In another example, the public key can be passed by the first user 1 only to one or more specific second users 4 (which again may for example be trusted friends or acquaintances of the first user 1). In another example, the public key may be the information 2 itself.

This enables the second user 4 to verify whether a visual representation encountered in a virtual world environment is the visual representation 3 of the first user 1. An example of this verification will now be described.

The information 2 associated with the first user 1 is obtained by (a computing device of) the second user 4. In this example, login details, to access a database on which the information 2 is stored in a non-encrypted form, have previously been made available to the second user 4, by for example the first user 1 directly or by some administrator, which may for example be responsible for the running of the environment (e.g. the computer game) in which the users' representations are present.

The encountered visual representation is obtained from the virtual world environment. This may be achieved by using a separate camera which is viewing the virtual world on a display screen. Alternatively or additionally, the encountered visual representation may be obtained from or using a video processing device that is involved in locally generating the images of the virtual world for the second user 4. The visual representation includes encrypted information embedded onto its visual appearance. The embedded encrypted information 5 can be used to verify the owner of the visual representation, which in this example is (allegedly) the first user 1.

The public key, which was made available by the first user 1 to the second user 4, is also obtained. The obtained public key is used to decrypt the embedded encrypted information 5 once it has been read from the surface of the visual representation.

The decrypted information obtained from the visual representation or avatar of the first user 1 is then compared with the information 2 that was made available in non-encrypted form by the first user 1. If it is found that the decrypted information is the same as the non-encrypted form of the information 2 made available by the first user 1 then it is determined that the decrypted information originated with the first user 1 and therefore that the visual representation encountered by the second user 4 is the visual representation 3 of the first user 1. If it is found that the decrypted information is not the same as the non-encrypted form of the information 2 made available by the first user 1 then it is determined that the decrypted information did not originate with the first user 1 and therefore that the visual representation encountered by the second user 4 is not a visual representation of the first user 1.

An advantage of this arrangement is that the first user can provide a way for the second user (and other users) to determine whether a visual representation that is encountered in a virtual world environment is a visual representation that is actually associated (and typically controlled by) with the first user. This is particularly helpful in enabling the second user (and other users) to distinguish between an authentic visual representation of the first user and a visual representation that is being used to impersonate the first user. This can all be carried out relatively quickly and seamlessly, by processes running in the background whilst the second user is navigating the virtual world, and without requiring specific action as such to be taken by the second user.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A computer-implemented method for enabling verification of identity of a user, the method comprising:
encrypting information associated with the user using a private key;
embedding the encrypted information onto the visual appearance of a visual representation associated with the user such that the encrypted information is visible to another user;
making the information associated with the user available to the other user as non-encrypted information; and
making a public key for decrypting the encrypted information available to the other user;
whereby the other user can decrypt the encrypted information embedded onto the visual appearance of the visual representation associated with the user and can compare the decrypted information with the information made available to the other user as non-encrypted information.

2. A computer-implemented method of verifying that a visual representation having encrypted information embedded onto its visual appearance is associated with a user, the method comprising:
obtaining the information associated with the user as non-encrypted information;
obtaining the visual representation;
decrypting using a public key the encrypted information embedded onto the visual appearance of the visual representation;
comparing the decrypted information from the visual representation with the obtained non-encrypted information associated with the user; and
determining that the visual representation is associated with the user if the decrypted information is the same as the non-encrypted information associated with the user.

3. A method according to claim 2, comprising:
determining that the visual representation is not associated with the user if the decrypted information is not the same as the information associated with the user.

4. A method according to any of claims 1 to 3, wherein the visual representation is an avatar provided for interaction in a virtual world environment.

5. A method according to any of claims 1 to 4, wherein the information associated with the user is biometric information of the user.

6. A method according to any of claims 1 to 5, wherein the public key is or comprises the information associated with the user.

7. A method according to any of claims 1 to 6, wherein the information associated with the user is stored in a database accessible to other users.

8. A method according to any of claims 1 to 7, wherein the encrypted information is embedded onto the visual appearance of a visual representation as one or more of: a barcode, a QR or matrix barcode, a colour code, and a colour pattern.

9. Apparatus comprising:
at least one processor;
at least one memory including computer program instructions;
the at least one memory and the computer program instructions being configured to, with the at least one processor, cause the apparatus to carry out a method according to any of claims 1 to 8.

10. A computer program comprising instructions such that when the computer program is executed on one or more computing devices, the one or more computing devices are arranged to:
encrypt information associated with the user using a private key;
embed the encrypted information onto the visual appearance of a visual representation associated with the user such that the encrypted information is visible to another user;
make the information associated with the user available to the other user as non-encrypted information; and
make a public key for decrypting the encrypted information available to the other user;
whereby the other user can decrypt the encrypted information embedded onto the visual appearance of the visual representation associated with the user and can compare the decrypted information with the information made available to the other user as non-encrypted information.

11. A computer program comprising instructions such that when the computer program is executed on one or more computing devices, the one or more computing devices are arranged to:
obtain the information associated with the user as non-encrypted information;
obtain the visual representation;
decrypt using a public key the encrypted information embedded onto the visual appearance of the visual representation;
compare the decrypted information from the visual representation with the obtained non-encrypted information associated with the user; and
determine that the visual representation is associated with the user if the decrypted information is the same as the non-encrypted information associated with the user.

12. A computer program according to claim 11, comprising instructions such that when the computer program is executed on one or more computing devices, the one or more computing devices are arranged to:
determine that the visual representation is not associated with the user if the decrypted information is not the same as the information associated with the user.

13. A computer program according to any of claims 10 to 12, wherein the visual representation is an avatar provided for interaction in a virtual world environment.

14. A computer program according to any of claims 10 to 13, wherein the information associated with the user is biometric information of the user.

15. A computer program according to any of claims 10 to 14, wherein the encrypted information is embedded onto the visual appearance of a visual representation as one or more of: a barcode, a QR or matrix barcode, a colour code, and a colour pattern.
